Europäisches Patentamt

European Patent Office

Office européen des brevets

(19)

(11) Publication number: **0 146 328**
A1

(12) **EUROPEAN PATENT APPLICATION**

(21) Application number: 84308580.4

(22) Date of filing: 10.12.84

(51) Int. Cl.⁴: **B 60 R 25/10**, B 60 Q 1/52

(30) Priority: 15.12.83 US 562397

(43) Date of publication of application: 26.06.85
Bulletin 85/26

(84) Designated Contracting States: DE FR GB SE

(71) Applicant: Montalvo, Samuel A., 780 S. Saratoga Avenue S113, San Jose California 95129 (US)

(72) Inventor: Montalvo, Samuel A., 780 S. Saratoga Avenue S113, San Jose California 95129 (US)

(74) Representative: Wright, Peter David John et al, R.G.C. Jenkins & Co. 12-15, Fetter Lane, London EC4A 1PL (GB)

(54) Automobile communicator.

(57) Provided is an anti-theft device for automobiles and other vehicles which uses a visual display (29) rather than a sound alarm to alert others to the fact that the vehicle has been stolen. This alarm function is accomplished by providing a logic system coupled to the vehicle ignition switch (16), a locking switch (15) and the vehicle electrical power supply (25). The logic system then provides appropriate signals to a memory system (27) which translates those signals into an input for the display system (29) of the device when the vehicle ignition switch (16) is turned on without first disarming the locking switch (15). Also provided is a separate input device which can be used to display other messages on the display system (29) of the anti-theft device. This portion of the anti-theft device is typically made up of a key-pad (17) which is coupled to a decoder. The decoder translates information from the key-pad (17) into binary form and provides that binary input to the memory (27) for outputting various messages. This latter aspect of the device has been found to be particularly useful for conveying emergency information and summoning assistance.

ACTORUM AG

## AUTOMOBILE COMMUNICATOR

### Background of the Invention

This invention relates generally to a visual vehicular communicator system which is particularly adapted to also serve as a burglar alarm.

In the prior art, vehicular burglar alarms are well known. For example, a typical system includes an alarm, an alarm switch which is set by the owner, one or more microswitches, and an actuating relay which is energized when one of the microswitches breaks contact. In a typical scenario, when an intruder causes one of the microswitches to break contact, for example by closing the ignition switch or opening a door, the actuating relay is energized and causes the alarm to go off.

Although there are many variations on this general theme, visually observable alarm systems for automobiles are not generally available, nor are visually observable communications systems which can be used to serve as a burglar alarm.

### Summary of the Invention

In accordance with preferred embodiments of the invention, an anti-theft device is provided for automobiles and other vehicles which uses a visual display rather than a sound alarm to alert others to the fact that the vehicle has been stolen. As in prior art systems, the device uses a locking switch to arm the system. Then if the ignition switch is turned on without first disarming (i.e., unlocking) the locking switch, a signal is provided to cause the visual display to provide an appropriate message, e.g., "STOLEN CAR." A similar result is obtained if the wiring harness connecting the anti-theft device to the vehicle electrical power system is severed.

This alarm function is accomplished by providing a logic system coupled to the vehicle ignition switch, the locking switch and vehicle electrical power supply. The logic system then provides appropriate signals to a memory system which translates those signals into an input for the display system of the device.

Also provided is a separate input device which can be used to display other messages on the display system of the anti-theft device. This portion of the anti-theft device is typically made up of a key-pad which is coupled to a decoder. The decoder translates information from the key-pad into binary form and provides that binary input to the memory for outputting various messages.

This latter aspect of the device has been found to be particularly useful for conveying emergency information and summoning assistance.

## Brief Description of the Drawings

Figure 1 is a diagrammatic representation of the device according to the invention.

Figure 2 shows a circuit diagram for the preferred embodiment of the invention.

## Detailed Description of the Invention

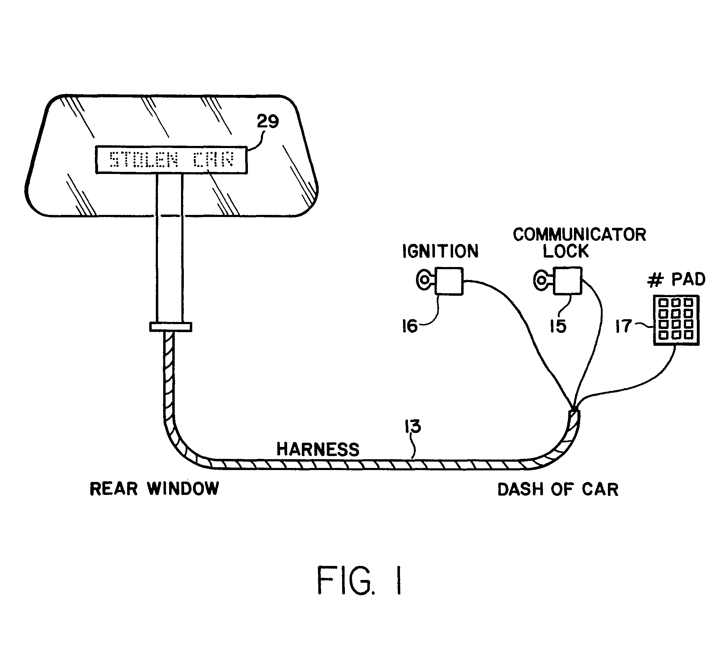

Shown in Figure 1 is a diagram of a preferred embodiment of the invention. The system includes a communicator unit 11 typically mounted near the rear of the vehicle (e.g., in the left rear window) for flashing messages which are visable to other motorists and pedestrians; a wiring harness 13; a communicator lock 15 for enabling an appropriate message to be displayed, e.g., "stolen vehicle," if ignition 16 of the vehicle is turned on without first disabling lock 15 or if the harness is cut; and an input device 17, such as a 10-key pad or other keyboard switch assembly for inputting data to the communicator unit to designate a particular message to be displayed.

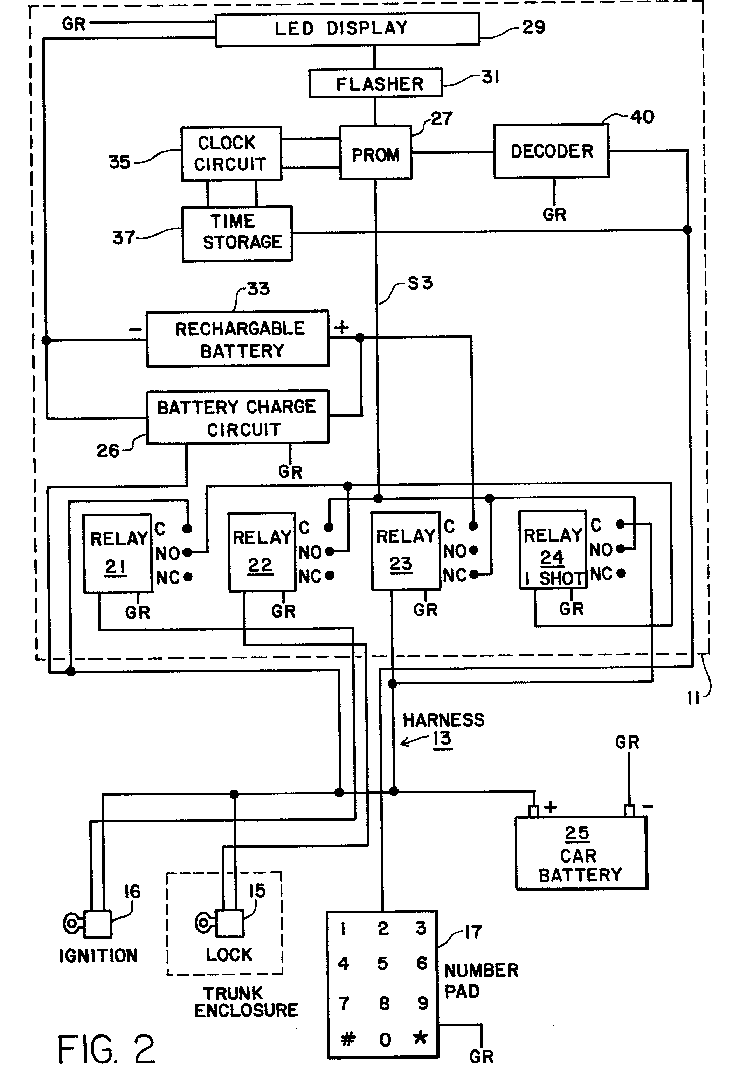

Figure 2 illustrates an internal arrangement according to the invention showing the various components comprising the system. In this embodiment, communicator unit 11 includes four (4) relays 21, 22, 23, and 24, relay 24 being a one-shot (monostable multivibrator). These relays provide the logic to accomplish the "buglar alarm" function. In operation when ignition switch 16 and communicator lock 15 are both off, and harness 13 is intact, the vehicle battery 25 provides power to relay 23 to insure that no signal is transmitted on signal line S3 (since S3 is attached to the normally closed contact of relay 23).

Similarly if the lock 15 is set and the ignition is off, no signal is present on S3. However, if the ignition is then switched on, relay 24 is set and a signal is provided to one input of a PROM 27 via signal line S3. PROM 27 is generally programmed so that when a signal is present on line S3 an appropriate message is flashed onto the visual display 29 via flasher 31. Display 29 is typically made up of an LED, flourescent, or NXI tube array, and includes driver electronics for that array.

Similarly, should the harness be cut, thereby severing the electrical connection between vehicle battery 25 and relay 23, a signal will again be present on line S3 since relay 23 will reset to its normally closed configuration connecting an auxiliary battery 33 to line S3. The same message as in the previous case is then flashed on display 29. To insure that battery 33 is always in a fully charged condition, a rechargeable battery is typically used together with a battery charging circuit 26 which operates off the vehicle electrical power system.

Also provided is an additional anti-theft system which is also activated by a signal on line S3. This system is made up of clock 35 coupled to PROM 27 and time storage element, memory 37, for storing the elapsed time since a signal was first initiated on line S3. Thus, in case of theft, when the vehicle is eventually recovered, the precise time at which it was stolen can be read out from memory 37.

During normal operation of the vehicle, communicator lock 15 will be off and no signal will be present on line S3. In this configuration, input device 17 can be used to input data to communicator 11. In a typical configuration, input device 17 has a key-pad for punching in a particular code corresponding to the desired message to be displayed. The punched-in code is then transformed into a binary address by a decoder 40 which is then input to PROM 27. The desired message is then flashed on display 29 according to what has been programmed into PROM 27. Such messages can be programmed for a myriad of uses. For example, for emergency purposes, the PROM might be programmed to produce the words, "HELP", "FLAT TIRE", "AAA", or "TOW TRUCK"; or for Citizens Band communications it might include the channel the driver is listening on. Essentially any short, easily recognizable, message can be flashed.

Those skilled in the art will understand that there are many different ways to implement the system. For example, the relays could be replaced by a combination of other devices such as latches and gates, or even a microprocessor, in order to achieve the desired logic. Similarly, in addition to having a stored repertoire in PROM, it is also possible to use an alphanumeric keyboard and microprocessor system to key in any desired message directly from the keyboard. It should also be apparent that for best results, the location of lock 15 should be obscure, e.g., hidden in the trunk or elsewhere to avoid easy detection. Also, for certain functions, it might be desirable to have a dual display, e.g., one which can be seen from both the front and back of the vehicle.

CLAIMS:

−6−

0146328

1. An anti-theft device for a vehicle having an electrical power system and an ignition switch, comprising:

locking means having a locked and unlocked state, for activating said anti-theft device when said locking means is in the locked state;

communicator means coupled to said locking means and to said ignition switch for displaying a first set of one or more symbols which can be seen from outside the vehicle when said locking means is in its locked state and said ignition switch is on, said symbols in said first set indicating that the vehicle has been stolen.

2. A device as in claim 1 further comprising coupling means for coupling said ignition switch, said locking means and said electrical power system to said communicator means.

3. A device as in claim 2 wherein said communicator means displays said first set of symbols when a portion or all or said coupling means is severed.

4. A device as in claim 3 wherein said communicator means further comprises a clock means for recording the elapsed time from when the ignition switch is turned on while the locking means is in its locked state.

5. A device as in claim 4 wherein said clock means records the time since severance, when a portion or all of said coupling means is severed.

6. A device as in claim 3 wherein said communicator means further comprises:

a display;

logic means for receiving a first signal from said locking means, a second signal from said ignition switch and a third signal from said electrical power system, said logic means in response to said first, second, and third signals providing a fourth signal; and

memory means coupled to said display and to said logic means for receiving said fourth signal from said logic means and in response to said fourth signal providing a fifth signal to said display to cause said first set of one or more symbols to be displayed.

7. A device as in claim 6 further comprising input means for providing selected groups of signals to said communicator means; and

said communicator means in response to each selected group of signals displaying an element of a second set of one or more symbols which can be seen from outside the vehicle.

8. A device as in claim 7 wherein said communicator means further comprises decoder means for receiving said selected groups of signals from said input means, and for transmitting binary signals equivalent to said selected groups of signals to said memory means, and said memory means in response to receiving said binary signals for generating output to drive said display to cause an element of said second set of one or more symbols to be displayed.

9. A device as in claim 6 wherein said communicator means further comprises an auxiliary power supply to provide power to said logic means when said communicator is severed from said electrical system.

10. A device as in claim 9 wherein said auxiliary power supply is rechargeable from said electrical power supply.

STOLEN CAR

29

IGNITION

COMMUNICATOR
LOCK

# PAD

16

15

17

13

HARNESS

REAR WINDOW

DASH OF CAR

FIG. 1

FIG. 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 335 370 (SCALLEY)<br>* Figure 4 * | 1 | B 60 R 25/10<br>B 60 Q 1/52 |
| A | US-A-4 418 330 (KAMICHIK)<br>* Figure 1 * | 1 | |
| A | FR-A-1 531 375 (FREZE)<br>* Page 1, right-hand column, lines 2-10 * | 1 | |

**TECHNICAL FIELDS SEARCHED (Int. Cl.4)**

B 60 R
B 60 Q
G 08 B

The present search report has been drawn up for all claims

| Place of search | Date of completion of the search | Examiner |
|---|---|---|
| THE HAGUE | 18-03-1985 | ONILLON C.G.A. |